# EUROPÄISCHE PATENTANMELDUNG

(11) **EP 1 002 998 A2**
(43) Veröffentlichungstag der Anmeldung: **24.05.2000**
(21) Anmeldenummer: 99115732.2
(22) Anmeldetag: 10.08.1999
(51) Int. Cl.: F23N 5/18

(54) **Heizgerät**

(30) Priorität: 20.11.1998 DE 19853573
(71) Anmelder: ROBERT BOSCH GMBH, 70442 Stuttgart (DE)
(72) Erfinder: Wehmeier, Kersten, 32549 Bad Oeynhausen (DE); Rotert, Markus, 73249 Wernau (DE); Bienzle, Marcus, 73760 Ostfildern (DE)

(57) **Zusammenfassung**

Die Erfindung geht aus von einem Heizgerät mit einem Gasbrenner (10), einer vorzugsweise kanalförmigen Leitung (12) für die Vormischung von Brenngas und Verbrennungsluft, einem Gebläse (14) zur Förderung der Verbrennungsluft, das in Abhängigkeit von der Wärmeanforderung durch ein Steuergerät (36) regelbar ist, sowie mit einem aus dem Luftmengenstrom eine Steuergröße ableitenden Sollwertgeber für ein Gasregelventil (22). Es wird vorgeschlagen, daß als Sollwertgeber für das Gasregelventil(22) ein LuftmengenAnemometer (24, 24') vorgesehen ist. Damit ist gegenüber einem pneumatischen Gas-Luftverbund ein größerer Modulationsbereich für den Gasbrenner (10) einstellbar.

## Beschreibung

### Stand der Technik

Die Erfindung geht aus von einem Heizgerät nach der Gattung des Hauptanspruchs. Bei bekannten Heizgeräten dieser Gattung (z.B. DE-PS 41 09 841) wird der Gasvolumenstrom in Abhängigkeit vom geförderten Luftvolumenstrom gesteuert, indem über eine in der Verbrennungsluftleitung angeordnete Drosselblende ein Differenzdruck erzeugt wird, der über Leitungen als Steuergröße an den Gasdruckregler des Heizgeräts übertragen wird. Aufgrund des quadratischen Zusammenhangs zwischen der Druckdifferenz und der Volumenstromänderung ist der Leistungsmodulationsbereich, d. h. das Verhältnis zwischen Teillast- und Vollastregelung begrenzt.

Unter dem Sammelbegriff Anemometer sind Geräte zur Messung der Geschwindigkeit in Strömungen bzw. zur Bestimmung von Durchflußmengen bekannt, wie z.B. Schalenkreuz-, Flügelrad-, Hitzdraht- und Glimmentladungsanemometer. Im Kfz-Bereich werden insbesondere Heißfilm- und Hitzdrahtsonden eingesetzt, mit deren Hilfe der Luftmassenstrom bestimmt werden kann.

### Vorteile der Erfindung

Mit dem im Heizgerät vorgesehenen Anemometer zur Bestimmung der zugeführten Verbrennungsluftmenge ist in vorteilhafter Weise eine nahezu uneingeschränkte Modulation des Brenners (Modulationsbereich >> 1:10) möglich, wodurch über eine hysteresefreie Steuerung eines elektrisch verstellbaren Gasventils eine beliebige Einstellung der Primärluftzahl für den Brenner über den gesamten Belastungsbereich möglich wird. Damit kann für die Luftzahl λ in Abhängigkeit von der Belastung eine Kennlinie mit positiver Steigung gewählt werden, wodurch das Emmissionsverhalten des Gasbrenners verbessert wird.

Durch die in den Unteransprüchen aufgeführten Maßnahmen sind weitere vorteilhafte Ausgestaltungen des Heizgeräts möglich.

Das Luftmengen- Anemometer ist in vorteilhafter Weise in Strömungsrichtung gesehen unmittelbar hinter dem Gebläse in einer kanalförmigen Leitung für die Verbrennungsluftzufuhr angeordnet.

Damit Temperaturänderungen der Verbrennungsluft ausgeregelt werden können, ist das Anemometer mit einem Temperaturfühler versehen, mit dessen Hilfe der Lufmassenstrom bestimmt werden kann.

Heißfilm- oder Hitzdrahtsonden zur Luftmassenbestimmung sind besonders geeignet, da sie aufgrund fehlender beweglicher Teile besonders zuverlässig und genau arbeiten.

### Zeichnung

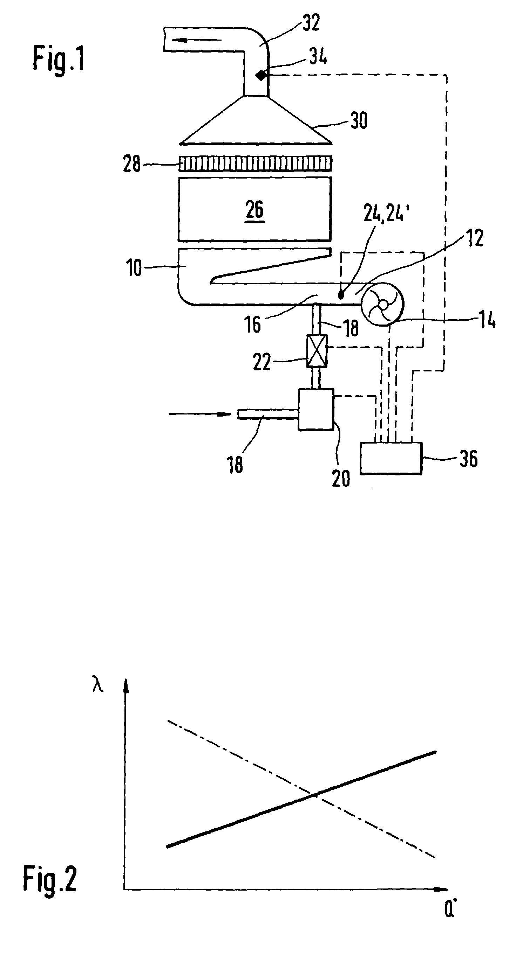

Ein Ausführungsbeispiel der Erfindung ist in der Zeichnung vereinfacht dargestellt und in der nachfolgenden Beschreibung näher erläutert. Es zeigen Figur 1 eine schematische Gesamtansicht des Heizgeräts und Figur 2 ein Diagramm, bei dem die Luftzahl λ in Abhängigkeit von der Brennerbelastung dargestellt ist.

### Beschreibung des Ausführungsbeispiels

Wie Figur 1 zeigt, besteht das Heizgerät aus einem Gasbrenner 10, der über eine kanalförmige Leitung 12 mit einem Gebläse 14 für die Zufuhr der Verbrennungsluft verbunden ist. Stromab vom Gebläse 14 ist in der kanalförmigen Leitung 12 eine Abzweigung 16 vorgesehen, in die eine Gaszufuhrleitung 18 einmündet. In der Gaszufuhrleitung 18 sind weiterhin Sicherheitsventile 20 sowie ein elektrisch ansteuerbares Gasventil 22 angeordnet. Zwischen der Abzweigung 16 und dem Gebläse 14 ist eine Hitzdrahtsonde 24 angeordnet, mit deren Hilfe der Verbrennungsluft-Volumenstrom bestimmt werden kann. Alternativ zu der Hitzdrahtsonde 24 ist es auch möglich, eine Heißfilmsonde 24' einzusetzen. Das Meßprinzip beider Sonden ist bekannt und beruht im wesentlichen darauf, den Fühlerwiderstand auf einer konstanten, aber wesentlich höheren Temperatur zu halten, als die des vorbeiströmenden Mediums. Eine Stromregelung hält den Widerstand auf gleichbleibender Temperatur. Dabei ist die Stromstärke ein Maß für die abgeführte Energie durch das vorbeiströmende Medium und damit ein Maß für die vorbeiströmende Verbrennungsluftmenge. Eine zweite Möglichkeit zur Ansteuerung der Hitzdrahtsonde 24 besteht darin, dem eigentlichen Hitzdraht ein moduliertes Temperatursignal aufzuprägen, welches von dem messenden Draht bzw. der Meßeinrichtung detektiert wird. Handelt es sich z.B. um ein sinusförmiges Temperatursignal, so ergibt sich nach Vergleich der beiden Temperaturverläufe eine Phasen- und Amplitudenverschiebung, die entsprechend ausgewertet werden kann. Die Phasenverschiebung ist eine Größe, mit deren Hilfe auf die Laufzeit und damit auch auf die Strömungsgeschwindigkeit geschlossen werden kann. Die Ansteuerung der Hitzdrahtsonde 24 kann auch so erfolgen, daß durch ein definiertes Strömungshindernis im Luftstrom ein temperaturmodulierendes Signal erzeugt wird, wobei die Massenstrominformation in der Frequenz des Signais enthalten ist. Bei unterschiedlichen Massenströmen verschiebt sich die Wirbelfrequenz.

An den Gasbrenner 10 schließt sich eine Brennkammer 26 an, die nach oben hin durch einen Wärmeübertrager 28 begrenzt wird. Hinter dem Wärmeübertrager 28 ist eine Abgassammelhaube 30 angeordnet, die in Strömungsrichtung gesehen in eine rohrförmige Abgasabführung 32 einmündet. Über eine in der Abgasabführung 32 angeordnete λ-Sonde 34 kann zusätzlich die Verbrennungsgüte erfaßt bzw. kontrolliert werden. Das Gebläse 14, die Sicherheitsventile 20, das Gasventil 22, die Hitzdraht- bzw. Heißfilmsonde 24, 24' und die λ-Sonde 34 sind an eine zentrale Steuereinheit 36 angeschlossen.

Die Regelung der Verbrennungsluft- bzw. Gaszufuhr während des Betriebs des Heizgeräts geschieht auf folgende Art und Weise: Entsprechend der Wärmeanforderung wird eine Gebläsedrehzahl eingestellt, wobei mit Hilfe der Hitzdraht- bzw. Heißfilmsonde 24, 24' der Luftvolumenstrom bestimmt wird und die z. B. für eine überstöchiometrische Verbrennung notwendige Gasmenge über das elektrisch ansteuerbare Gasventil 22 zugeführt wird. Durch das Hinterlegen einer spezifischen Kennlinie in der zentralen Steuereinheit 36 kann, wie in Figur 2 anhand der durchgezogenen Linie dargestellt ist, jedem Lastzustand des Gasbrenners 10 eine definierte Luftzahl λ zugeordnet werden. Im Gegensatz zum Kennlinienverlauf eines pneumatisch geregelten Gas-Luftverbunds (strichpunktiert dargestellt) kann die Kennlinie so gewählt werden, daß mit zunehmender Brennerbelastung die Luftzahl zunimmt; dabei verbessert der positive Anstieg dieser Kennlinie das Emmissionsverhalten des Gasbrenners 10. Die in der Abgasabführung 32 angeordnete λ-Sonde 34, die z.B. als Sauerstoffsonde ausgebildet ist, dient zur Sicherstellung der Notlaufeigenschaften bei einem Ausfall der Hitzdraht- bzw. Heißfilmsonde 24, 24'. Hiermit kann die Verbrennungsgüte bzw. das Brenngas-Luftverhältnis überprüft und notfalls korrigiert werden. Ein zusätzlich an der Hitzdraht- bzw. Heißfilmsonde 24, 24' vorgesehener Temperaturfühler erfaßt die Verbrennungslufttemperatur, wodurch der für die Verbrennung maßgebliche Luftmassenstrom bestimmt werden kann.

Wie bereits eingangs erwähnt, sind neben der Hitzdraht- bzw. Heißfilmsonde 24, 24' auch andere Anemometer-Ausführungen zur Erfassung der Verbrennungsluftmenge denkbar, mit deren Hilfe die aus dem Stand der Technik bekannten Nachteile überwunden werden können. Auch sind für die Sonde andere Einbaupositionen denkbar, wie z.B. in Strömungsrichtung gesehen vor dem Gebläse 14 oder an einer Stelle, an der bereits Brenngas und Verbrennungsluft zusammengeführt sind. Bei Heizgeräten mit geschlossener Brennkammer 26 ist es auch möglich, die Anemometer- Sonde im Abgasweg anzuordnen, vorausgesetzt in den beiden letztgenannten Fällen ist die genaue öffnungscharakteristik des Gasregelventils 22 bekannt.

## Patentansprüche

1. Heizgerät mit einem Gasbrenner, einer vorzugsweise kanalförmigen Leitung für die Vormischung von Brenngas und Verbrennungsluft, einem Gebläse zur Förderung der Verbrennungsluft, das in Abhängigkeit von der Wärmeanforderung durch ein Steuergerät regelbar ist, sowie mit einem aus dem Luftmengenstrom eine Steuergröße ableitenden sollwertgeber für ein Gasregelventil, dadurch gekennzeichnet, daß als Sollwertgeber für das Gasregelventil (22) ein Luftmengen- Anemometer (24, 24') vorgesehen ist.

2. Heizgerät nach Anspruch 1, dadurch gekennzeichnet, daß das Luftmengen- Anemometer (24, 24') in Strömungsrichtung gesehen unmittelbar hinter dem Gebläse (14) in einer kanalförmigen Leitung (12) für die Verbrennungsluftzutuhr angeordnet ist.

3. Heizgerät nach Anspruch 1 oder 2, dadurch gekennzeichnet, daß das Luftmengen- Anemometer (24, 24') zur Erfassung des Luftmassenstroms mit einem Temperaturfühler versehen ist, der Temperaturänderungen der Verbrennungsluft erfaßt.

4. Heizgerät nach einem der vorhergehenden Ansprüche, dadurch gekennzeichnet, daß das Anemometer als Heißfilm- oder Hitzdraht- Luftmassenmesser (24, 24') ausgebildet ist.
